(19) Europäisches Patentamt
European Patent Office
Office européen des brevets

(11) EP 4 199 141 A1

(12) **EUROPEAN PATENT APPLICATION**
published in accordance with Art. 153(4) EPC

(43) Date of publication:
**21.06.2023 Bulletin 2023/25**

(21) Application number: **22811519.2**

(22) Date of filing: **06.05.2022**

(51) International Patent Classification (IPC):
***H01M 4/134*** *(2010.01)* ***H01M 4/133*** *(2010.01)*
***H01M 4/36*** *(2006.01)* ***H01M 4/587*** *(2010.01)*
***H01M 4/38*** *(2006.01)* ***H01M 4/62*** *(2006.01)*
***H01M 10/052*** *(2010.01)*

(52) Cooperative Patent Classification (CPC):
**H01M 4/133; H01M 4/134; H01M 4/36; H01M 4/38; H01M 4/587; H01M 4/62; H01M 10/052;**
Y02E 60/10

(86) International application number:
**PCT/KR2022/006458**

(87) International publication number:
**WO 2022/250326 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.05.2021 KR 20210067355**

(71) Applicant: **LG Energy Solution, Ltd.**
**Seoul 07335 (KR)**

(72) Inventors:
- **LEE, Su Min**
  **Daejeon 34122 (KR)**
- **OH, Sang Seung**
  **Daejeon 34122 (KR)**
- **KIM, Hye Hyeon**
  **Daejeon 34122 (KR)**
- **JO, Chi Ho**
  **Daejeon 34122 (KR)**

(74) Representative: **Hoffmann Eitle**
**Patent- und Rechtsanwälte PartmbB**
**Arabellastraße 30**
**81925 München (DE)**

# (54) ANODE FOR LITHIUM SECONDARY BATTERY, AND LITHIUM SECONDARY BATTERY COMPRISING SAME

(57) A negative electrode for a lithium secondary battery and a lithium secondary battery including the same, wherein the negative electrode includes a negative electrode active material contains a carbon material and a silicon material, and has a form and/or structure in which the size of each material is controlled so that it is possible to improve the charging/discharging capacity and efficiency of the negative electrode, suppress the side reaction between the negative electrode active material and the electrolyte, while solving a problem of the negative electrode mixture layer peeling due to the expansion and contraction of the negative electrode active material. In addition, the lithium secondary battery of the present technology includes a positive electrode containing a positive electrode active material and a positive electrode additive to further improve the initial charging/discharging efficiency and capacity of the battery.

EP 4 199 141 A1

## Description

[Technical Field]

The present disclosure relates to a negative electrode for a lithium secondary battery and a lithium secondary battery including the same.

This application claims the benefit of priority based on Korean Patent Application No. 10-2021-0067355, filed on May 26, 2021, and the entire contents of the Korean patent application are incorporated herein by reference.

[Background Art]

In particular, as the technology development and the demand for mobile devices increase, the demand for secondary batteries as energy sources is rapidly increasing. Among these secondary batteries, lithium secondary batteries having a high energy density and a high operating potential, a long cycle life, and a low self-discharge rate have been commercialized and widely used.

Recently, as the lithium secondary batteries are used as power sources for middlelarge devices such as electric vehicles, lithium secondary batteries have a high capacity, a high energy density, and a low cost are more required, and there is a demand for an irreversible additive used in an electrode to have a higher irreversible capacity.

According to this demand, existing irreversible additives such as $Li_6CoO_4$ and the like have been developed. However, since the irreversible additive is structurally unstable and thus may generate a large amount of oxygen gas ($O_2$) as follows as charging of the secondary battery proceeds. Thus, the use of a high content of the irreversible additive in the positive electrode has limitations in terms of charging and discharging efficiency and safety of the lithium secondary battery.

$$Li_6CoO_4 \rightarrow Li_4CoO_4 \xrightarrow{O_2\ \text{generation}} Li_1CoO_{2.5} \xrightarrow{O_2\ \text{generation}} CoO_2$$

Accordingly, efforts have been made to reduce the irreversibility of the lithium secondary battery using a low-content irreversible additive. However, when the irreversible additive is used in a low content, specifically, in a small amount of less than 5 wt% based on a total weight of positive electrode slurry, there are problems in that it is difficult to ensure dispersibility in the positive electrode slurry so that the electrical properties of the lithium secondary battery are degraded, and an amount of loss is increased due to scattering of the irreversible additive having a low particle size during a manufacturing process of the positive electrode so that the degree of freedom of process design is lowered.

Therefore, when the irreversible additive is used, there is the need for technological development in which the dispersibility of the irreversible additive in the positive electrode slurry is secured and thus the electrical properties of the lithium secondary battery are secured.

[Related Art Document]

[Patent Document]

Korean Patent Laid-Open Application No. 10-2016-0037334

[Disclosure]

[Technical Problem]

An object of the present technology is to provide a negative electrode for a lithium secondary battery, which is capable of improving a battery lifetime while increasing the initial efficiency and capacity of the lithium secondary battery, and a lithium secondary battery including the same.

[Technical Solution]

The present technology is directed to solving the above-described problem and provides a negative electrode for a lithium secondary battery, including a negative electrode current collector, and a negative electrode mixture layer which is located on the negative electrode current collector and contains a negative electrode active material, wherein the negative electrode active material includes a carbon material and a silicon material, an average particle size ($D_{50}$)

of the carbon material ranges from 1 μm to 20 μm, the silicon material includes one or more selected from the group consisting of first silicon particles having an average particle size ($D_{50}$) ranging from 1 μm to 20 μm, second silicon particles having an average particle size ($D_{50}$) ranging from 30 nm to 500 nm, and the negative electrode mixture layer contains 40 wt% or less of the silicon element (Si) based on a total weight.

The negative electrode mixture layer may include Si in an amount ranging from 1.5 wt% to 25 wt% based on the total weight.

The carbon material may include one or more selected from the group consisting of natural graphite, artificial graphite, carbon black, acetylene black, Ketjen black, and carbon fiber.

The silicon material may be pure silicon (Si) particles.

The negative electrode active material may have a structure in which the first silicon particles or the second silicon particles are uniformly dispersed using a carbon material as a matrix or may have a structure in which the first silicon particles are uniformly dispersed using a carbon material as a matrix and have a form in which the second silicon particles are partially adsorbed on a surface of the carbon material.

The negative electrode active material may further include one or more carbon bodies selected from the group consisting of carbon nanotubes and graphene, and the average particle size $D_{50}$ of the carbon body may range from 10 nm to 100 nm.

When the negative electrode active material includes the carbon body, the negative electrode active material may have a structure in which the first silicon particles are uniformly dispersed using the carbon material as a matrix and a form in which the carbon body is partially or entirely adsorbed on the surface of the first silicon particle, or the negative electrode active material may have a structure in which the first silicon particles are uniformly dispersed using the carbon material as a matrix and may have a form in which the second silicon particles are partially adsorbed on the surface of the carbon material and have a form in which the carbon body is partially or entirely adsorbed on the surface of the first silicon particle.

The present technology is directed to solving the above-described problem and provides a lithium secondary battery of the present technology including a positive electrode including a positive electrode current collector and a positive electrode mixture layer which is located on the positive electrode current collector and includes a positive electrode active material and a positive electrode additive, the above-described negative electrode of the present technology, and a separator located between the positive electrode and the negative electrode.

The positive electrode additive may include any one or more among lithium metal oxides represented by Chemical Formulas 1 to 3 below.

[Chemical Formula 1] $Li_xCo_{(1-y)}Zn_yO_4$.

[Chemical Formula 2] $Li_xFeO_4$.

[Chemical Formula 3] $Li_pNi_qO_r$.

In Chemical Formulas 1 to 3, x and y are $4 \leq x \leq 7$ and $0 \leq y \leq 0.5$, and p, q, and r are $1.5 < p < 3$, $0.8 \leq q \leq 1.2$ and $2 \leq r \leq 4$.

A content of the positive electrode additive may be 1 wt% or less based on the total weight of the positive electrode mixture layer.

The positive electrode active material may include a lithium nickel metal oxide represented by Chemical Formula 4:

[Chemical Formula 4] $Li_a[Ni_bCo_cMn_dM^1_e]O_f$.

In Chemical Formula 4, $M^1$ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and a, b, c, d, e, and f are $1.0 \leq a \leq 1.30$, $0.1 \leq b < 1$, $0 < c \leq 0.5$, $0 < d \leq 0.5$, $0 \leq e \leq 0.2$ and $1.5 \leq f \leq 5$, respectively.

[Advantageous Effects]

A negative electrode for a lithium secondary battery according to the present technology includes a negative electrode active material which contains a carbon material and a silicon material, contains silicon element (Si) in a specific content, and has a form and/or structure in which a size of each material is controlled so that it is possible to improve the charging/discharging capacity and efficiency of a negative electrode, suppress the side reaction between the negative electrode active material and an electrolyte during charging and discharging while solving a problem of the negative electrode mixture layer peeling due to expansion and contraction of the negative electrode active material.

In addition, since the lithium secondary battery according to the present technology includes a positive electrode

containing a specific positive electrode active material and a positive electrode additive together with the negative electrode to further improve the initial charging/discharging efficiency and capacity of the battery, there is an advantage in that electrical performance of the battery is excellent.

[Best Mode]

The present invention may be modified into various forms and may have a variety of embodiments, and therefore, specific embodiments will be described in detail.

However, the embodiments are not to be taken in a sense which limits the present invention to the specific embodiments and should be construed to include all modifications, equivalents, or substituents falling within the spirit and technical scope of the present invention.

In the present disclosure, the terms "comprising," "having," and the like are used to specify the presence of a feature, a number, a step, an operation, a component, an element, or a combination thereof described herein, and they do not preclude the presence or addition of one or more other features, numbers, steps, operations, components, elements, or combinations thereof.

In addition, in the present disclosure, when a portion of a layer, a film, a region, a plate, or the like is described as being "on" another portion, this includes not only a case in which the portion is "directly on" another portion but also a case in which still another portion is present between the portion and another portion. Conversely, when a portion of a layer, a film, a region, a plate, or the like is described as being "under" another portion, this includes not only a case in which the portion is "directly under" another portion but also a case in which still another portion is present between the portion and another portion. In addition, in this application, being disposed "on" may include the case of being disposed not only on an upper portion but also on a lower portion.

In addition, in the present disclosure, "including as a main component" may mean 50 wt% or more, 60 wt% or more, 70 wt% or more, 80 wt% or more, 90 wt% or more, or 95 wt% or more of components defined based on the total weight. For example, "including silicon atoms as a main component" may mean 50 wt% or more, 60 wt% or more, 70 wt% or more, 80 wt% or more, 90 wt% or more, or 95 wt% or more of silicon atoms based on the total weight of particles and in some cases, may mean that the entire particles are formed of silicon atoms so that the silicon atoms are included in an amount of 100 wt%.

Hereinafter, the present invention will be described in more detail.

## Negative electrode for lithium secondary battery

According to one embodiment of the present technology, a negative electrode for a lithium secondary battery includes a negative electrode current collector, and a negative electrode mixture layer which is located on the negative electrode current collector and contains a negative electrode active material, wherein the negative electrode active material includes a carbon material and a silicon material, an average particle size $D_{50}$ of the carbon material ranges from 1 μm to 20 μm, and the silicon material includes one or more selected from the group consisting of first silicon particles having an average particle size $D_{50}$ ranging from 1 μm to 20 μm, second silicon particles having an average particle size $D_{50}$ ranging from 30 nm to 500 nm.

The negative electrode for a lithium secondary battery according to the present technology may have a structure in which the negative electrode mixture layer is located on the negative electrode current collector, and the negative electrode mixture layer may be formed by applying, drying, and pressing a negative electrode slurry, which includes the negative electrode active material and a binder assisting in bonding of the negative electrode active material on the negative electrode current collector.

Here, the negative electrode active material includes a carbon material in which carbon atoms serve as a main component and a silicon material in which silicon atoms serve as a main component. The carbon material may include graphite with a completely layered crystal structure as natural graphite, soft carbon with a low crystallinity layered crystal structure (a graphene structure is a structure in which hexagonal honeycomb planes of carbon are disposed in layers), hard carbon in which these structures are mixed with amorphous portions, artificial graphite, expanded graphite, a carbon fiber, non-graphitized carbon, carbon black, acetylene black, Ketjen black, carbon nanotubes, fullerenes, or activated carbon. The carbon material may include one or more selected from the group consisting of natural graphite, artificial graphite, carbon black, acetylene black, Ketjen black, and a carbon fiber.

In addition, the carbon material may have a micrometer-level size. For example, an average particle size $D_{50}$ of the carbon material may range from 1 μm to 20 μm, and more specifically, from 1 μm to 15 μm, from 1 μm to 10 μm, from 10 μm to 15 μm, from 2 μm to 5 μm, or from 1 μm to 2 μm.

In addition, the silicon material is a material containing silicon (Si) atoms as a main component, and particles made of pure Si atoms, that is, Si (Si purity: >98%) may be used. According to the present technology, when compared to a case in which silicon oxide ($SiO_x$) (here, $0<x\leq2$) or silicon carbide (SiC) is applied as the negative electrode active

material, the pure Si particles are used as the silicon material to improve the initial charging/discharging capacity and efficiency while further minimizing a volume change during charging and discharging of the battery.

In addition, the silicon material includes a first silicon particle having a micrometer-level size and a second silicon particle having a nanometer-level size. For example, an average particle size $D_{50}$ of the first silicon particle may range from 1 μm to 20 μm, and more specifically, from 2 μm to 10 μm, from 5 μm to 15 μm, from 10 μm to 20 μm, from 12 μm to 17 μm, from 1 μm to 9 μm, or from 1 μm to 5 μm. According to the present technology, by controlling the average particle size of the first silicon particle within the above range, it is possible to prevent the pure first Si particle in the form of a microparticle from causing a side reaction with other components to degrade the activity of the negative electrode active material during a manufacturing process of the negative electrode and, simultaneously, improve low workability due to dust.

In addition, an average particle size $D_{50}$ of the second silicon particle may range from 30 nm to 500 nm, and specifically, from 30 nm to 350 nm, from 30 nm to 300 nm, from 30 nm to 250 nm, from 30 nm to 200 nm, from 50 nm to 300 nm, or from 50 nm to 150 nm. According to the present technology, by controlling the average particle size of the second silicon particle within the above range, it is possible to effectively suppress volume expansion of the second silicon particle during the charging and discharging of the battery and easily induce complexation with the micrometer-level carbon material.

In addition, in order to induce a network structure between silicon materials while suppressing the volume expansion of the silicon materials during the charging and discharging of the battery, the negative electrode active material may further include one or more carbon bodies selected from the group consisting of carbon nanotubes and graphene. In this case, the carbon body may have a nanometer-level size, and specifically, an average particle size $D_{50}$ may range from 10 nm to 100 nm. For example, the average particle size $D_{50}$ of the carbon body may range from 10 nm to 80 nm, from 10 nm to 50 nm, from 40 nm to 80 nm, from 50 nm to 100 nm, or from 10 nm to 20 nm. According to the present technology, by controlling the average particle size $D_{50}$ of the carbon body within the above range, it is possible to induce complexation with the micrometer-level first silicon particle and form an electrical network between the carbon body and the first silicon particle so that electrical conductivity of the negative electrode active material can be improved.

In addition, the negative electrode active material may include 40 wt% or less of Si based on the total weight of the negative electrode mixture layer, and specifically, may include Si in an amount ranging from 0.01 to 40 wt%, from 0.1 to 40 wt%, from 0.1 to 30 wt%, from 0.1 to 25 wt%, from 1.5 to 25 wt%, from 1 to 22 wt%, from 10 to 22 wt%, from 8 to 14 wt%, from 5 to 9 wt%, from 1 to 9 wt%, or from 0.5 to 5 wt% based on the total weight of the negative electrode mixture layer. The content of Si contained in the negative electrode active material may be calculated using the content and molar mass of a raw material used as the negative electrode active material, and in some cases, may be calculated through inductively coupled plasma-atomic emission spectroscopy (ICP-AES). According to the present technology, by controlling the content of Si in the negative electrode active material within the above range, a charging capacity per unit mass can be improved while reducing lithium consumption and irreversible capacity loss during the initial charging and discharging of the battery, and contraction and/or expansion of the silicon material due to the charging and discharging is minimized so that it is possible to prevent desorption of the negative electrode mixture layer even after the battery is repeatedly charged and discharged.

In addition, the sizes of the carbon material and the silicon material may be controlled in a predetermined range to be included in the negative electrode active material in a predetermined shape and/or structure. Specifically, when the negative electrode active material includes the carbon material and the first or second silicon particles, the negative electrode active material can have a structure in which the first silicon particles or the second silicon particles are uniformly dispersed using the carbon material as a matrix. In this case, the carbon material and each dispersed silicon particle can be partially aggregated to include a group of particles.

In addition, when the negative electrode active material includes the first silicon particles and the second silicon particles together with the carbon material, the negative electrode active material may have a structure in which the first silicon particles, each having a large particle diameter, are uniformly dispersed using the micrometer-level carbon material as a matrix and may have a form in which the second silicon particles, each having a small particle diameter, are partially adsorbed on a surface of the carbon material. Here, the "adsorption" may mean that the carbon material and the second silicon particles are electrostatically and physically attached at the surface or may mean that polar functional groups such as a hydroxyl group (-OH), a carboxyl group (-COOH), an amino group (-NH2), and a thiol group (-SH) are introduced to surfaces of one or more of the carbon material and the second silicon particle, and thus the carbon material and the second silicon particle are chemically bound at the surface of the carbon material. As described above, when the carbon material and the second silicon particle have an adsorption relationship in which the carbon material and the second silicon particle are chemically bonded, there is an advantage in that, due to the second silicon particle, it is possible to more effectively improve the reduction in electrical conductivity of the negative electrode active material and, simultaneously, prevent the second silicon particle from causing a side reaction with the electrolyte.

In addition, when the negative electrode active material includes the carbon material and the silicon material

together with a carbon body, the negative electrode active material may have a structure in which the first silicon particles are uniformly dispersed using the carbon material as a matrix, and the surface of the first silicon particle may have a form in which the carbon body is partially or entirely adsorbed. Alternatively, the negative electrode active material may have a structure in which the first silicon particles are uniformly dispersed using the carbon material as a matrix and have a form in which the second silicon particles are partially adsorbed on the surface of the carbon material and a form in which the carbon body is partially or entirely adsorbed on the surface of the first silicon particle. As described above, according to the present technology, by achieving a form in which the second silicon particle having a nanometer-level size and the carbon body are respectively adsorbed on the surfaces of the carbon material having a micrometer-level size and the first silicon particle, it is possible to prevent the volume expansion of the first silicon particle during the charging and discharging of the battery while preventing the electrical properties of the second silicon particle from being degraded.

In addition, the negative electrode active material may have a structure in which the carbon body is partially adsorbed on the surface of the second silicon particle and dispersed using the carbon material as a matrix. In this case, the second silicon particle may be surrounded by the carbon body in the form of an aggregation group in which the second silicon particles are aggregated, and in the aggregation group, the carbon body may be dispersed and included in the aggregation group in an amount of 10 wt% or less based on the total weight of the aggregation group. According to the present technology, by achieving a structure in which the carbon body is dispersed in the aggregation group of the second silicon particles, it is possible to improve electrical conductivity without degrading the activity of the negative electrode active material. In addition, the aggregation group of the second silicon particles includes pores between the second silicon particles, and the carbon body having a very low volume expansion rate has a structure surrounding the surfaces of the second silicon particles and/or the aggregation group thereof. Thus, during the charging and discharging of the battery, not only it is possible to prevent a solid electrolyte interphase (SEI) layer formed on the negative electrode mixture layer from being damaged, but it is also possible to block side reactions with the electrolyte while improving wettability for the electrolyte by forming pores between the aggregation groups.

Here, the aggregation group of the second silicon particles in which the carbon body is adsorbed on the surface of the second silicon particle may have an average particle size $D_{50}$ ranging from 0.5 μm to 10 μm, and more specifically, from 0.5 μm to 8 μm, from 0.5 μm to 5 μm, from 0.5 μm to 1 μm, from 5 μm to 10 μm, from 1 μm to 7 μm, from 2 μm to 6 μm, from 0.9 μm to 2 μm, or from 1 μm to 3 μm.

Meanwhile, the negative electrode mixture layer may include a binder for adhering the negative electrode active material in addition to the negative electrode active material, and the binder may be any one or a mixture of one or two among, for example, polyvinylidene fluoride (PVDF), polyacrylic acid (PAA), polymethacrylic acid (PMAA), and styrenebutadiene rubber (SBR).

In addition, a content of the binder may range from 0.5 to 5 parts by weight based on 100 parts by weight of the negative electrode active material, and specifically, 0.5 to 4 parts by weight or 1 to 3 parts by weight.

In addition, the negative electrode mixture layer may have an average thickness ranging from 100 μm to 200 μm, and specifically, from 100 μm to 180 μm, from 100 μm to 150 μm, from 120 μm to 200 μm, from 140 μm to 200 μm, or from 140 μm to 160 μm.

In addition, the negative electrode current collector is not particularly limited as long as a material has high conductivity without causing a chemical change in the battery, and for example, copper, stainless steel, nickel, titanium, and calcined carbon may be used for the negative electrode current collector, and in the case of using aluminum or stainless steel, one whose surface is treated with carbon, nickel, titanium, or silver may be used. In addition, like the positive electrode current collector, fine irregularities may be formed on a surface of the negative electrode current collector to enhance a bonding force with the negative electrode active material, and a negative electrode current collector in any form such as a film, a sheet, a foil, a net, a porous body, a foam, or a nonwoven fabric may be used. In addition, an average thickness of the negative electrode current collector may be appropriately applied in the range of 3 μm to 500 μm in consideration of the conductivity and total thickness of the negative electrode to be manufactured.

As described above, since the negative electrode for a lithium secondary battery according to the present technology includes the negative electrode active material which contains the carbon material and the silicon material, contains Si in a specific content, and has a specific form and/or structure in which the size of each material is controlled, not only is it possible to improve the charging/discharging capacity and efficiency of the negative electrode, but it is also possible to effectively block the side reaction between the negative electrode active material and the electrolyte due to the charging and discharging of the battery, and solve a problem of the negative electrode mixture layer peeling due to expansion and contraction of the negative electrode active material.

## Lithium secondary battery

In addition, in one embodiment of the present technology, a lithium secondary battery includes a positive electrode including a positive electrode current collector and a positive electrode mixture layer which is located on the

positive electrode current collector and includes a positive electrode active material and a positive electrode additive, the above-described negative electrode according to the present technology, and a separator located between the positive electrode and the negative electrode.

The lithium secondary battery according to the present technology has a structure including the positive electrode, the above-described negative electrode of the present technology, and the separator interposed between the positive electrode and the negative electrode.

The positive electrode includes the positive electrode mixture layer formed by applying, drying, and pressing a positive electrode slurry including a positive electrode active material and a positive electrode additive on the positive electrode current collector, and the positive electrode mixture layer may selectively further include a conductive material, an organic binder polymer, and an additive, as necessary.

In this case, the positive electrode active material may include a lithium nickel metal oxide including two or more elements selected from the group consisting of nickel (Ni), cobalt (Co), and manganese (Mn), and in some cases, the lithium nickel metal oxide may have a form another transition metal ($M^1$) is doped. For example, the positive electrode active material may be a lithium nickel metal oxide represented by Chemical Formula 4 below, which is reversibly intercalated and deintercalated.

[Chemical Formula 4] $Li_a[Ni_bCo_cMn_dM^1_e]O_f$.

In Chemical Formula 4, $M^1$ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and a, b, c, d, e, and f are $1.0 \le a \le 1.30$, $0.1 \le b < 1$, $0 < c \le 0.5$, $0 < d \le 0.5$, $0 \le e \le 0.2$ and $1.5 \le f \le 5$, respectively.

More specifically, the positive electrode active material may include one or more compounds selected from the group consisting of $LiNi_{1/3}Co_{1/3}Mn_{1/3}O_2$, $LiNi_{0.6}Co_{0.2}Mn_{0.2}O_2$, $LiNi_{0.8}Co_{0.1}Mn_{0.1}O_2$, $LiNi_{0.9}Co_{0.05}Mn_{0.05}O_2$, $LiNi_{0.8}Co_{0.1}Mn_{0.05}Al_{0.05}O_2$, and $LiNi_{0.7}Co_{0.1}Mn_{0.1}Al_{0.1}O_2$. As an example, as the positive electrode active material that is a lithium nickel metal oxide represented by Chemical Formula 4, $LiNi_{0.6}Co_{0.2}Mn_{0.2}O_2$, $LiNi_{0.8}Co_{0.1}Mn_{0.1}O_2$, and $LiNi_{0.7}Co_{0.1}Mn_{0.1}Al_{0.1}O_2$ alone or a combination thereof may be used.

In addition, a content of the positive electrode active material may range from 85 to 95 parts by weight based on 100 parts by weight of a mixture layer, and specifically, may range from 88 to 95 parts by weight, from 90 to 95 parts by weight, from 86 to 90 parts by weight, or from 92 to 95 parts by weight.

In addition, the mixture layer may include a positive electrode additive that imparts an irreversible capacity along with the positive electrode active material exhibiting activity, and the positive electrode additive may include any one or more among lithium metal oxides represented by Chemical Formulas 1 to 3 below.

[Chemical Formula 1] $Li_xCo_{(1-y)}Zn_yO_4$.

[Chemical Formula 2] $Li_xFeO_4$.

[Chemical Formula 3] $Li_pNi_qO_r$.

In Chemical Formulas 1 to 3, x and y are $4 \le x \le 7$ and $0 \le y \le 0.5$, and p, q, and r are $1.5 < p < 3$, $0.8 \le q \le 1.2$ and $2 \le r \le 4$.

The positive electrode additive may contain Li in excess and may provide Li ions to Li ion consumption generated by an irreversible chemical and physical reaction at the negative electrode during initial charging, and thus a charging capacity of the battery is increased and the irreversible capacity is reduced so that lifetime characteristics can be improved. According to the present technology, the positive electrode additive may include any one or more among the lithium metal oxides represented by Chemical Formulas 1 to 3.

When compared to the nickel-containing oxide commonly used in the art, the lithium metal oxide represented by Chemical Formula 1 has a higher content of lithium ions and thus, during the initial activation of the battery, lost lithium ions due to an irreversible reaction may be supplemented so that it is possible to significantly improve the charging/discharging capacity of the battery. The lithium metal oxide represented by Chemical Formula 1 may include $Li_6CoO_4$, $Li_6Co_{0.5}Zn_{0.5}O_4$, and $Li_6Co_{0.7}Zn_{0.3}O_4$.

In addition, since the lithium metal oxide represented by Chemical Formula 2 has a high theoretical capacity of about 700 mAh/g, an effect of improving charging/discharging efficiency after the initial activation of the battery is great. The lithium metal oxide represented by Chemical Formula 2 may include $Li_5FeO_4$, and $Li_6FeO_4$.

In addition, since the lithium metal oxide represented by Chemical Formula 3 is capable of being delithiated at a low voltage of 3.5 V, there is an advantage in that lithium ions are deintercalated without affecting the reaction of the positive electrode active material when the battery is activated. The lithium metal oxide represented by Chemical Formula 3 may include $Li_2NiO_2$.

In addition, the content of the positive electrode additive may be 1 wt% or less based on the total weight of the

positive electrode active material, and specifically, may range from 0.01 to 1 wt%, from 0.1 to 0.9 wt%, from 0.3 to 0.9 wt%, from 0.2 to 0.7 wt%, or from 0.5 to 0.9 wt%.

Further, in addition to the positive electrode active material and the positive electrode additive, the mixture layer may further include a conductive material, a binder, and an additive. In this case, the conductive material may be used to improve the performance of the positive electrode, such as electrical conductivity, and one or more carbon-based materials selected from the group consisting of natural graphite, artificial graphite, carbon black, acetylene black, Ketjen black, and carbon fiber may be used as the conductive material. For example, the conductive material may include acetylene black.

In addition, the conductive material may be included in an amount of 1 to 10 parts by weight based on 100 parts by weight of the positive electrode mixture layer, and specifically, may be included in an amount of 2 to 8 parts by weight, 1 to 5 parts by weight, or 1 to 3 parts by weight.

In addition, the binder may include at least one resin selected from the group consisting of a polyvinylidene fluoride-hexafluoropropylene copolymer (PVdF-co-HFP), polyvinylidene fluoride (PVdF), polyacrylonitrile, polymethylmethacrylate, and a copolymer thereof. As an example, the binder may include polyvinylidene fluoride.

In addition, the binder may be included in an amount of 1 to 10 parts by weight based on 100 parts by weight of the positive electrode mixture layer, and specifically, may be included in an amount of 2 to 8 parts by weight, 1 to 5 parts by weight, or 1 to 3 parts by weight.

In addition, although an average thickness of the mixture layer is not particularly limited, specifically, the average thickness may range from 50 $\mu$m to 300 $\mu$m, and more specifically, from 100 $\mu$m to 200 $\mu$m, from 80 $\mu$m to 150 $\mu$m, from 120 $\mu$m to 170 $\mu$m, from 150 $\mu$m to 300 $\mu$m, from 200 $\mu$m to 300 $\mu$m, or from 150 $\mu$m to 190 $\mu$m.

In addition, as the positive electrode current collector in the positive electrode, a material having high conductivity without causing a chemical change in the battery may be used. For example, stainless steel, aluminum, Ni, titanium, or calcined carbon may be used, and in the case of using aluminum or stainless steel, one whose surface is treated with carbon, Ni, titanium, or silver may be used. In addition, fine irregularities may be formed on a surface of the positive electrode current collector to enhance a bonding force of the positive electrode active material, and a positive electrode current collector in various forms such as a film, a sheet, a foil, a net, a porous body, a foam, and a nonwoven fabric may be used. In addition, an average thickness of the positive electrode current collector may be appropriately applied in the range of 3 $\mu$m to 500 $\mu$m in consideration of the conductivity and total thickness of the positive electrode to be manufactured.

In addition, the separator is interposed between the positive electrode and the negative electrode, and an insulating thin film having high ion permeability and high mechanical strength is used as the separator. The separator is not particularly limited as long as a material is generally used in the art, and specifically, a sheet or nonwoven fabric made of chemical-resistant and hydrophobic polypropylene, glass fiber, or a sheet or nonwoven fabric made of polyethylene may be used as the separator. In some cases, a composite separator in which a porous polymer base material such as a sheet or nonwoven fabric is coated with inorganic particles/organic particles by an organic binder polymer may be used for the separator. When a solid electrolyte such as a polymer is used as the electrolyte, the solid electrolyte may also serve as the separator. In addition, the separator may have an average pore diameter ranging from 0.01 $\mu$m to 10 $\mu$m and an average thickness ranging from 5 $\mu$m to 300 $\mu$m.

Meanwhile, the positive electrode and the negative electrode may be wound in the form of a jelly roll and accommodated in a cylindrical battery, a prismatic battery, or a pouch-type battery or may be accommodated in a pouch-type battery in a folding or stack-and-folding form, but the present technology is not limited thereto.

In addition, the electrolyte containing a lithium salt according to the present technology may consist of an electrolyte and a lithium salt, and a non-aqueous organic solvent, an organic solid electrolyte, or an inorganic solid electrolyte may be used for the electrolyte.

For example, as the non-aqueous organic solvent, an aprotic organic solvent such as N-methyl-2-pyrrolidinone, ethylene carbonate, propylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, a dioxolane derivative, sulfolane, methyl sulfolane, 1,3-dimethyl-2-imidazolidinone, a propylene carbonate derivative, a tetrahydrofuran derivative, ether, methyl propionate or ethyl propionate may be used.

For example, as the organic solid electrolyte, a polyethylene derivative, a polyethylene oxide derivative, a polypropylene oxide derivative, a phosphate ester polymer, poly agitation lysine, polyester sulfide, polyvinyl alcohol (PVA), polyvinylidene fluoride, or a polymer containing an ionic dissociation group may be used.

Nitrides, halides, sulfates of Li such as $Li_3N$, LiI, $Li_5Ni_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, or $Li_3PO_4$-$Li_2S$-$SiS_2$ may be used as the inorganic solid electrolyte.

The lithium salt is a material that is easily soluble in a non-aqueous electrolyte. For example, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloroborane lithium, lithium lower aliphatic carboxylates, Li tetraphenylboronate, or imide may be used as the lithium salt.

In addition, for the purpose of improving charging/discharging characteristics and flame retardancy, for example, pyridine, triethylphosphite, triethanolamine, cyclic ether, ethylene diamine, n-glyme, hexaphosphoric acid triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxyethanol, or aluminum trichloride may be added to the electrolyte. In some cases, in order to impart incombustibility, a halogencontaining solvent such as carbon tetrachloride and ethylene trifluoride may be further included, and in order to improve high-temperature storage characteristics, a carbon dioxide gas may be further included, and fluoro-ethylene carbonate (FEC) and propene sultone (PRS) may be further included.

Meanwhile, according to one embodiment of the present technology, a battery module including the above-described secondary battery as a unit cell is provided, and a battery pack including the battery module is provided.

The battery pack may be used as a power source for medium-large devices requiring high-temperature stability, long cycle characteristics, and high rate characteristics. Specific examples of the medium-large devices include power tools driven by an electric motor, electric vehicles (EVs) including EVs, hybrid EVs (HEVs), and plug-in HEVs (PHEVs), electric two-wheeled vehicles including electric bicycles (E-bikes) and electric scooters (E-scooters), electric golf carts, electric trucks, or systems for power storage, and more specifically, HEVs, but the present technology is not limited thereto.

[Detailed Description of the Preferred Embodiments]

Hereinafter, the present invention will be described in more detail with reference to examples and experimental examples.

However, the following examples and experimental examples are merely illustrative of the present invention, and the content of the present invention is not limited to the following examples and experimental examples.

**Examples 1 to 11 Manufacture of negative electrode for lithium secondary battery**

A first silicon particle (Si purity: >99.8% and an average particle size $D_{50}$: 4±0.1 μm), a second silicon particle (Si purity: >99.8% and an average particle size $D_{50}$: 300±10 nm), and graphene as a carbon body (an average particle size $D_{50}$: 50±10 nm) and natural graphite as a carbon material (an average particle size $D_{50}$: 5±0.1 μm) were prepared and mixed as shown in Table 1 below to prepare a negative electrode active material. Here, when the carbon body is included in the negative electrode active material, the first silicon particles and/or the second silicon particles and the graphene were mixed first to adsorb the graphene on the surface of an aggregated group of the first silicon particles and/or the second silicon particles, and then the natural graphite was mixed to prepare the negative electrode active material.

Then, 3 parts by weight of SBR as a binder was mixed based on 100 parts by weight of the negative electrode active material to prepare a negative electrode slurry.

The prepared negative electrode slurry was applied on one side of a copper current collector having a size of 10 cm×20 cm and dried to form a negative electrode mixture layer (an average thickness: 120 μm). In this case, a temperature of circulated air was 80 °C. Then, roll pressing was performed and drying was performed in a vacuum oven at a temperature of 130 °C for 12 hours.

[Table 1]

| | First silicon particle | Second silicon particle | Graphene | Natural graphite |
|---|---|---|---|---|
| Example 1 | 3 wt% | - | - | 97 wt% |
| Example 2 | 15 wt% | - | - | 85 wt% |
| Example 3 | - | 3 wt% | - | 97 wt% |
| Example 4 | - | 15 wt% | - | 85 wt% |
| Example 5 | 2.5 wt% | 2.5 wt% | - | 95 wt% |
| Example 6 | 8 wt% | 8 wt% | - | 84 wt% |
| Example 7 | 3 wt% | - | 1 wt% | 96 wt% |
| Example 8 | 15 wt% | - | 5 wt% | 80 wt% |
| Example 9 | - | 3 wt% | 1 wt% | 96 wt% |
| Example 10 | - | 15 wt% | 5 wt% | 80 wt% |
| Example 11 | 5 wt% | 5 wt% | 2 wt% | 88 wt% |

**Comparative Example 1 to 9 Manufacture of negative electrode for lithium secondary battery**

A first silicon particle (Si purity: >99.8% and an average particle size $D_{50}$: 4±0.1 μm), a second silicon particle (Si purity: >99.8% and an average particle size $D_{50}$: 300±10 nm), silicon oxide (SiO) particles (Si element content: 46.7 wt% based the total weight of the particles and average particle size $D_{50}$: 4±0.1 μm) and natural graphite as a carbon material (an average particle size $D_{50}$: 5±0.1 μm) were prepared and mixed as shown in Table 2 below to prepare a negative electrode active material, and then 3 parts by weight of SBR as a binder was mixed based on 100 parts by weight of the negative electrode active material to prepare a negative electrode slurry.

The prepared negative electrode slurry was applied on one side of a copper current collector having a size of 10 cm×20 cm and dried to form a negative electrode mixture layer (an average thickness: 120 μm). In this case, a temperature of circulated air was 80 °C. Then, roll pressing was performed and drying was performed in a vacuum oven at a temperature of 130 °C for 12 hours.

[Table 2]

| | First silicon particle | Second silicon particle | SiO | Natural graphite |
|---|---|---|---|---|
| Comparativ e Example 1 | - | - | 15 wt% | 85 wt% |
| Comparativ e Example 2 | 7.5 wt% | - | 7.5 wt% | 85 wt% |
| Comparativ e Example 3 | - | 7.5 wt% | 7.5 wt% | 85 wt% |
| Comparativ e Example 4 | 1 wt% | - | - | 99 wt% |
| Comparativ e Example 5 | 50 wt% | - | - | 50 wt% |
| Comparativ e Example 6 | - | 1 wt% | - | 97 wt% |
| Comparativ e Example 7 | - | 50 wt% | - | 50 wt% |
| Comparativ e Example 8 | 0.5 wt% | 0.5 wt% | - | 99 wt% |
| Comparativ e Example 9 | 25 wt% | 25 wt% | - | 50 wt% |

**Examples 12 to 24 and Comparative Examples 10 to 18 Manufacture of Li secondary battery**

An N-methylpyrrolidone solvent was injected into a homo mixer, and as shown in Table 3 below, 0.8 parts by weight of a positive electrode additive, 2 parts by weight of carbon black as a conductive material, and 2 parts by weight of PVdF as a binder were weighed and input based on 100 parts by weight of $LiNi_{0.6}Co_{0.2}Mn_{0.2}O_2$ as a positive electrode active material and mixed at 3,000 rpm for 60 minutes to prepare a positive electrode slurry. The prepared positive electrode slurry was applied on one side of an aluminum current collector having a size of 10 cm×20 cm and dried to form a positive electrode mixture layer (an average thickness: 150 μm). In this case, a temperature of circulated air was 80 °C. Then, roll pressing was performed and drying was performed in a vacuum oven at a temperature of 130 °C for 12 hours.

Then, a separator (thickness: about 16 μm) made of a porous polyethylene (PE) film was interposed between the manufactured positive electrode and each negative electrode manufactured in Examples 1 to 11 and Comparative Examples 1 to 9, and E2DVC was injected as the electrolyte to manufacture a full cell-type cell.

Here, the "E2DVC" is one kind of carbonate-based electrolyte and is a solution in which a mixture of ethylene carbonate (EC):dimethyl carbonate (DMC):diethyl carbonate (DEC)=1:1:1 (volume ratio) is mixed with lithium hexafluorophosphate ($LiPF_6$ of 1.0M) and vinyl carbonate (VC of 2 wt%).

[Table 3]

| | Type of positive electrode additives | Type of negative electrodes |
|---|---|---|
| Example 12 | $Li_6Co_{0.7}Zn_{0.3}O_4$ | Negative electrode of Example 1 |
| Example 13 | $Li_6FeO_4$ | Negative electrode of Example 1 |
| Example 14 | $Li_2NiO_2$ | Negative electrode of Example 1 |
| Example 15 | $Li_6Co_{0.7}Zn_{0.3}O_4$ | Negative electrode of Example 2 |
| Example 16 | $Li_6Co_{0.7}Zn_{0.3}O_4$ | Negative electrode of Example 3 |

(continued)

| | Type of positive electrode additives | Type of negative electrodes |
|---|---|---|
| Example 17 | $Li_6Co_{0.7}Zn_{0.3}O_4$ | Negative electrode of Example 4 |
| Example 18 | $Li_6Co_{0.7}Zn_{0.3}O_4$ | Negative electrode of Example 5 |
| Example 19 | $Li_6Co_{0.7}Zn_{0.3}O_4$ | Negative electrode of Example 6 |
| Example 20 | $Li_6Co_{0.7}Zn_{0.3}O_4$ | Negative electrode of Example 7 |
| Example 21 | $Li_6Co_{0.7}Zn_{0.3}O_4$ | Negative electrode of Example 8 |
| Example 22 | $Li_6Co_{0.7}Zn_{0.3}O_4$ | Negative electrode of Example 9 |
| Example 23 | $Li_6Co_{0.7}Zn_{0.3}O_4$ | Negative electrode of Example 10 |
| Example 24 | $Li_6Co_{0.7}Zn_{0.3}O_4$ | Negative electrode of Example 11 |
| Comparative Example 10 | $Li_6Co_{0.7}Zn_{0.3}O_4$ | Negative electrode of Comparative Example 1 |
| Comparative Example 11 | $Li_6Co_{0.7}Zn_{0.3}O_4$ | Negative electrode of Comparative Example 2 |
| Comparative Example 12 | $Li_6Co_{0.7}Zn_{0.3}O_4$ | Negative electrode of Comparative Example 3 |
| Comparative Example 13 | $Li_6Co_{0.7}Zn_{0.3}O_4$ | Negative electrode of Comparative Example 4 |
| Comparative Example 14 | $Li_6Co_{0.7}Zn_{0.3}O_4$ | Negative electrode of Comparative Example 5 |
| Comparative Example 15 | $Li_6Co_{0.7}Zn_{0.3}O_4$ | Negative electrode of Comparative Example 6 |
| Comparative Example 16 | $Li_6Co_{0.7}Zn_{0.3}O_4$ | Negative electrode of Comparative Example 7 |
| Comparative Example 17 | $Li_6Co_{0.7}Zn_{0.3}O_4$ | Negative electrode of Comparative Example 8 |
| Comparative Example 18 | $Li_6Co_{0.7}Zn_{0.3}O_4$ | Negative electrode of Comparative Example 9 |

**Experimental Example Performance evaluation of lithium secondary battery**

In order to evaluate performance of the negative electrode for a lithium secondary battery according to the present technology, the following experiment was performed on a lithium secondary battery including the negative electrode.

A) Evaluation of initial charging/discharging capacity and efficiency

Secondary batteries manufactured in Examples and Comparative Examples were charged at a temperature of 25 °C with a charging current of 0.05 C to a charge termination voltage ranging from 4.2 V to 4.25 V, and charging was performed at a voltage of 0.02 V until a current density become 0.01 C to activate the secondary batteries. Thereafter, discharging was performed to a termination voltage of 2 V with a discharge current of 0.05 C, the resistance of the electrode and an initial charging/discharging capacity per unit mass were measured, and initial efficiency was calculated according to the measured charging/discharging capacity and Equation 1 below, and the results are shown in Table 4 below.

[Equation 1]

$$\text{Initial efficiency (\%)} = (\text{discharging capacity at one cycle} / \text{charging capacity at one cycle}) \times 100$$

B) Evaluation of amount of gas generation due to electrolyte decomposition during charging and discharging

For each of the secondary batteries of Examples and Comparative Examples activated above, charging and discharging were repeatedly performed 50 times at a temperature of 45 °C under a condition of 0.3 C. Amounts of carbon monoxide, carbon dioxide, and ethylene gases, which are generated due to electrolyte decomposition during each

charging and discharging, were measured to calculate the total amount of gas generated due to the electrolyte decomposition during the 50 times of charging and discharging. The results are shown in Table 4 below.

C) Evaluation of adhesive strength of negative electrode mixture layer after charging and discharging

The above-described secondary batteries charged and discharged 50 times were disassembled to separate the negative electrodes. Then, a current collector of the negative electrode was fixed using a tensile tester, a peel force was measured by peeling the negative electrode mixture layer at a temperature of 25 °C at a speed of 100 mm/min and an angle of 90°, and the measured peel force was defined as the adhesive strength of the negative electrode mixture layer on which the charging and discharging were repeatedly performed. The results are shown in the following Table 4.

[Table 4]

| | Initial charging/discharging performance | | Total amount of gas generation [ml/g] | Peel force [N/m] |
|---|---|---|---|---|
| | Capacity [mAh] | Efficiency [%] | | |
| Example 12 | 100 | 81.1 | 31 | 398 |
| Example 13 | 99.8 | 80.8 | 38 | 397 |
| Example 14 | 99.5 | 80.9 | 37 | 398 |
| Example 15 | 101 | 81.7 | 42 | 389 |
| Example 16 | 100 | 80.4 | 32 | 420 |
| Example 17 | 100.1 | 80.6 | 38 | 415 |
| Example 18 | 101.2 | 81.1 | 27 | 407 |
| Example 19 | 101.6 | 82.3 | 32 | 401 |
| Example 20 | 101.2 | 81.5 | 26 | 412 |
| Example 21 | 101.9 | 81.8 | 28 | 409 |
| Example 22 | 101.3 | 80.4 | 30 | 426 |
| Example 23 | 101.1 | 80.7 | 33 | 419 |
| Example 24 | 101.5 | 81.6 | 27 | 423 |
| Comparative Example 10 | 99 | 78.3 | 77 | 361 |
| Comparative Example 11 | 99.2 | 79.4 | 61 | 374 |
| Comparative Example 12 | 89.9 | 79.0 | 59 | 393 |
| Comparative Example 13 | 98.1 | 79.9 | 21 | 400 |
| Comparative Example 14 | 100 | 80.5 | 53 | 228 |
| Comparative Example 15 | 98.2 | 78.4 | 24 | 406 |
| Comparative Example 16 | 100.1 | 78.1 | 69 | 348 |
| Comparative Example 17 | 99.1 | 79.2 | 23 | 382 |
| Comparative Example 18 | 100.2 | 80.2 | 62 | 237 |

As shown in Table 4, it can be seen that the lithium secondary battery according to the present technology has high initial charging and discharging capacity and efficiency, decomposition of the electrolyte was less even when the charging and discharging were repeatedly performed, and volume expansion of the negative electrode active material was suppressed so that durability was improved.

Specifically, it was confirmed that all the lithium secondary batteries of Examples manufactured according to the present technology exhibited a high initial charge/discharge capacity of 99.5 mAh or more and a high efficiency of 80% or more. In addition, in the lithium secondary battery, it was confirmed that when the charging and discharging 50 times were performed, the decomposition of the electrolyte generated at the negative electrode was improved, and thus the amounts of gases such as carbon dioxide, carbon monoxide, and ethylene, which were generated due to the decomposition of the electrolyte, was significantly reduced. In addition, even when the secondary battery of the embodiment is repeatedly charged and discharged, it was confirmed that the volume expansion of the negative electrode active material contained in the negative electrode mixture layer was reduced, and thus the adhesive strength between the negative electrode current collector and the negative electrode mixture layer was maintained high.

From the above results, the negative electrode for a lithium secondary battery according to the present technology includes the negative electrode active material which contains the carbon material and the silicon material, contains Si in a specific content, and has a form and/or structure in which the size of each material is controlled so that it is possible to improve the charging/discharging capacity and the efficiency of the negative electrode, suppress the side reaction between the negative electrode active material and the electrolyte during the charging and discharging while solving a problem of the negative electrode mixture layer peeling due to the expansion and contraction of the negative electrode active material. In addition, since the lithium secondary battery according to the present technology including the positive electrode includes the positive electrode containing the specific positive electrode active material and the positive electrode additive together with the negative electrode to further improve the initial charging/discharging efficiency and capacity of the battery, there is an advantage in that electrical performance of the battery is excellent.

Although the above description has been made with reference to exemplary embodiments of the present invention, it should be understood that various alterations and modifications of the present invention can be devised by those skilled in the art to which the present invention pertains without departing from the spirit and scope of the present invention, which are defined by the appended claims.

Therefore, the technical scope of the present invention should not be limited to the contents described in the detailed description of this specification, but should be determined by the scope of the appended claims.

## Claims

1. A negative electrode for a lithium secondary battery, comprising:

   a negative electrode current collector; and
   a negative electrode mixture layer which is located on the negative electrode current collector and contains a negative electrode active material,
   wherein the negative electrode active material includes a carbon material and a silicon material,
   wherein an average particle size ($D_{50}$) of the carbon material ranges from 1 μm to 20 μm,
   wherein the silicon material includes at least one of first silicon particles having an average particle size ($D_{50}$) ranging from 1 μm to 20 μm, second silicon particles having an average particle size ($D_{50}$) ranging from 30 nm to 500 nm, and
   wherein the negative electrode mixture layer contains 40 wt% or less of silicon (Si) based on a total weight of the negative electrode mixture layer.

2. The negative electrode of claim 1, wherein the negative electrode mixture layer contains Si in an amount ranging from 1.5 wt% to 25 wt% based on the total weight of the negative electrode mixture layer.

3. The negative electrode of claim 1, wherein the carbon material includes at least one of natural graphite, artificial graphite, carbon black, acetylene black, Ketjen black, or carbon fiber.

4. The negative electrode of claim 1, wherein the silicon material is a silicon (Si) particle.

5. The negative electrode of claim 1, wherein the negative electrode active material has a structure in which the first silicon particles or the second silicon particles are uniformly dispersed using the carbon material as a matrix.

6. The negative electrode of claim 1, wherein the negative electrode active material has a structure in which the first

silicon particles are uniformly dispersed using the carbon material as a matrix and the negative electrode active material further has a form in which the second silicon particles are partially adsorbed on a surface of the carbon material.

**7.** The negative electrode of claim 1, wherein:

the negative electrode active material further includes a carbon body selected from the group consisting of carbon nanotubes and graphene; and
an average particle size $D_{50}$ of the carbon body ranges from 10 nm to 50 nm.

**8.** The negative electrode of claim 7, wherein the negative electrode active material has a structure in which the first silicon particles are uniformly dispersed using the carbon material as a matrix and the negative electrode active material further has a form in which the carbon body is partially or entirely adsorbed on a surface of the first silicon particle.

**9.** The negative electrode of claim 7, wherein the negative electrode active material has a structure in which the first silicon particles are uniformly dispersed using the carbon material as a matrix, the negative electrode active material has a form in which the second silicon particles are partially adsorbed on the surface of the carbon material, and the negative electrode active material has a form in which the carbon body is partially or entirely adsorbed on the surface of the first silicon particle.

**10.** A lithium secondary battery comprising:

a positive electrode including a positive electrode current collector and a positive electrode mixture layer coated on the positive electrode current collector and including a positive electrode active material and a positive electrode additive;
the negative electrode according to claim 1; and
a separator located between the positive electrode and the negative electrode.

**11.** The lithium secondary battery of claim 10, wherein the positive electrode additive includes any one or more among lithium metal oxides represented by Chemical Formulas 1 to 3 below:

[Chemical Formula 1] $Li_xCo_{(1-y)}Zn_yO_4$,

[Chemical Formula 2] $Li_xFeO_4$,

[Chemical Formula 3] $Li_pNi_qO_r$, and

in Chemical Formulas 1 to 3, wherein x and y are $4 \le x \le 7$ and $0 \le y \le 0.5$, and p, q, and r are $1.5 < p < 3$, $0.8 \le q \le 1.2$ and $2 \le r \le 4$.

**12.** The lithium secondary battery of claim 10, wherein a content of the positive electrode additive is 1 wt% or less based on the total weight of the positive electrode mixture layer.

**13.** The lithium secondary battery of claim 10, wherein the positive electrode active material includes a lithium nickel metal oxide of Chemical Formula 4:

[Chemical Formula 4] $Li_a[Ni_bCo_cMn_dM^1_e]O_f$,

and

in Chemical Formula 4, $M^1$ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
wherein a, b, c, d, e, and f are $1.0 \le a \le 1.30$, $0.1 \le b < 1$, $0 < c \le 0.5$, $0 < d \le 0.5$, $0 \le e \le 0.2$ and $1.5 \le f \le 5$.

**INTERNATIONAL SEARCH REPORT**

International application No. **PCT/KR2022/006458**

**A. CLASSIFICATION OF SUBJECT MATTER**

**H01M 4/134**(2010.01)i; **H01M 4/133**(2010.01)i; **H01M 4/36**(2006.01)i; **H01M 4/587**(2010.01)i; **H01M 4/38**(2006.01)i; **H01M 4/62**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 4/134(2010.01); C01B 32/05(2017.01); C01B 32/182(2017.01); H01M 10/052(2010.01); H01M 10/0525(2010.01); H01M 10/42(2006.01); H01M 4/13(2010.01); H01M 4/38(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소 (carbon), 규소 (silicon), 입경 (particle diameter), 양극 첨가제 (cathode additive), 음극 (negative pole)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2016-0064193 A (RENAULT S.A.S) 07 June 2016 (2016-06-07)<br>See claims 1-15; and paragraphs [0075] and [0121]. | 1-5<br>6-13 |
| Y | KR 10-2019-0086008 A (JIANGSU DAOYING TECHNOLOGY CO., LTD.) 19 July 2019 (2019-07-19)<br>See claims 1 and 7. | 6-9 |
| Y | KR 10-2021-0055586 A (LG ENERGY SOLUTION, LTD.) 17 May 2021 (2021-05-17)<br>See claims 1 and 5-7; and paragraph [0093]. | 10-13 |
| A | CN 110429272 A (SHANGHAI YULU NEW ENERGY TECHNOLOGY CO., LTD.) 08 November 2019 (2019-11-08)<br>See entire document. | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 August 2022** | **26 August 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**

International application No.
**PCT/KR2022/006458**

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0030566 A (COMMISSARIAT A L'ENERGIE ATOMIQUE ET AUX ENERGIES ALTERNATIVES et al.) 23 March 2018 (2018-03-23)<br>See entire document. | 1-13 |

Form PCT/ISA/210 (second sheet) (July 2019)

**INTERNATIONAL SEARCH REPORT**
**Information on patent family members**

International application No.
**PCT/KR2022/006458**

| Patent document cited in search report | Publication date (day/month/year) | Patent family member(s) | Publication date (day/month/year) |
|---|---|---|---|
| KR 10-2016-0064193 A | 07 June 2016 | CN 105829243 A | 03 August 2016 |
| | | EP 3052441 A1 | 10 August 2016 |
| | | EP 3052441 B1 | 29 July 2020 |
| | | FR 3011234 A1 | 03 April 2015 |
| | | FR 3011234 B1 | 02 October 2015 |
| | | JP 2016-533626 A | 27 October 2016 |
| | | JP 6581096 B2 | 25 September 2019 |
| | | KR 10-2241403 B1 | 16 April 2021 |
| | | US 2016-0248081 A1 | 25 August 2016 |
| | | WO 2015-044618 A1 | 02 April 2015 |
| KR 10-2019-0086008 A | 19 July 2019 | CA 3035900 A1 | 18 March 2019 |
| | | CN 107658450 A | 02 February 2018 |
| | | JP 2019-536246 A | 12 December 2019 |
| | | JP 7030119 B2 | 04 March 2022 |
| | | KR 10-2239750 B1 | 12 April 2021 |
| | | US 1335895 B2 | 17 May 2022 |
| | | US 2020-0058921 A1 | 20 February 2020 |
| | | WO 2019-052572 A1 | 21 March 2019 |
| KR 10-2021-0055586 A | 17 May 2021 | EP 3982460 A1 | 13 April 2022 |
| | | WO 2021-091108 A1 | 14 May 2021 |
| CN 110429272 A | 08 November 2019 | None | |
| KR 10-2018-0030566 A | 23 March 2018 | CN 107925124 A | 17 April 2018 |
| | | EP 3133690 A1 | 22 February 2017 |
| | | EP 3326230 A1 | 30 May 2018 |
| | | EP 3326230 B1 | 29 December 2021 |
| | | JP 2018-520494 A | 26 July 2018 |
| | | JP 6858175 B2 | 14 April 2021 |
| | | US 1056691 B2 | 06 July 2021 |
| | | US 2018-0241037 A1 | 23 August 2018 |
| | | WO 2017-013111 A1 | 26 January 2017 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020210067355
- KR 1020160037334